Europäisches Patentamt

European Patent Office

Office européen des brevets

(19)

(11) Publication number: **0 238 292**
**A1**

(12) # EUROPEAN PATENT APPLICATION

(21) Application number: **87302242.0**

(22) Date of filing: **17.03.87**

(51) Int. Cl.⁴: **B 25 H 1/00**
B 23 Q 1/16, B 60 S 5/00,
B 66 C 23/20, F 16 C 33/20,
F 16 C 11/04

(30) Priority: **18.03.86 NL 8600682**

(43) Date of publication of application:
**23.09.87 Bulletin 87/39**

(84) Designated Contracting States:
**BE CH DE ES FR IT LI LU NL SE**

(71) Applicant: **De Weerd, Willem Marines**
**Albertlaan 25**
**NL-8072 CH Nunspeet (NL)**

(72) Inventor: **De Weerd, Willem Marines**
**Albertlaan 25**
**NL-8072 CH Nunspeet (NL)**

(74) Representative: **Kirby, Harold Douglas Benson et al**
**G.F. Redfern & Company Marlborough Lodge 14**
**Farncombe Road**
**Worthing West Sussex BN11 2BT (GB)**

(54) **Service boom.**

(57) There is described a service boom adapted to be mounted to a wall (6) at one of its ends for pivotal movement about a vertical axis. The boom has two sections (2,3) hinged together about a further vertical axis, each boom section comprising two vertically spaced tubes (8,9,13,14) joined at their respective ends. Supply cables and lines pass along the interior of one of the tubes to a housing (7) at the free end of the boom, where outlet sockets (33,34) are located. The other tube serves to conduct exhaust gases to an extractor. As the joint (4) between the boom sections (2,3), flexible bellows portions (18,19) are provided to connect the respective upper (8,13) and lower tubes (9,14) of each boom section (2,3). The pivotal mounting and the hinged joint are provided with synthetic bushes (47) and washers (27) to ensure that the friction at the hinge is less than that at the pivot.

Fig. 1

EP 0 238 292 A1

**Description**

"SERVICE BOOM"

The present invention relates to a device for providing a mobile serving supply point at a work station, and comprises an arm mounted above the work station to rotate about a vertical swivel pin at one arm end and the arm carrying at its free end supply points for electricity, air, vacuum etc. The arm comprises two sections connected by a hinge joint, the hinge axis being parallel to the vertical swivel axis. An arm of this kind may be used in a garage, for example, to enable devices such as lights, electrical sockets, compressed air outlets, and oil or waste gas exhausts to be brought to locations within the operating radius of the arm, the supply and/or exhaust lines running through or along the arm. An arm of this kind can also be useful where tools, particularly pneumatic tools, need to be regularly used within the range of the arm, since the tools may be supplied with compressed air via the arm.

Devices of this kind may also be employed in garages, for example, to carry motor car exhaust gases out of the working area. However, present devices suffer from the disadvantage that the second, outboard, portion of the arm persists, in use, in taking up a preferred position. This preferred position is usually either in line with the first portion of the arm or at right angles to it. It also frequently happens that the whole arm adopts a preferred position. The reasons for this may be that the portion of the arm fastened to the wall, which pivots about a vertical pin, is either unable to withstand torsional forces or cannot withstand the heavy loading of the outstretched arm, and sags. Because the hinge pins and the swivel pins produce too little friction, the entire arm or a section of the arm can easily move under the action of its own weight.

An object of the invention is to provide an arm consisting of two sections connected by a hinge joint, one end being mounted so as to be rotatable about a fixed vertical swivel pin while the other end can be freely moved within the range of the arm, eliminating the above-mentioned disadvantages: that is to say, the arm or parts of the arm remain stationary in the position in which they were left at all times unless a force is applied to move the arm.

According to the present invention, a service boom comprises first and second elongate boom sections, a first end of the first boom section being adapted to be mounted to a wall for pivotal movement about a vertical axis, a first end of the second boom section carrying attachment points for services, and the second ends of the first and second boom sections being joined together by a hinged joint for relative rotation about a vertical axis.

In an advantageous embodiment of the service boom, the hinged joint includes a first pivot pin whose central portion is received in a bore in a projection mounted on one boom section, and whose ends are received in aligned bores formed in a pair of arms mounted on the other boom section and synthetic washers are interposed between the projection and the arms.

A further advantageous feature of the service boom is that the first end of the first boom section may include a vertical tubular portion at whose ends are disposed bushes of friction-reducing material, the bushes being rotatably mounted on a vertical shaft passing through the tubular portion and adapted for attachment to a wall.

The second boom section of a service boom having the above-mentioned features can easily be rotated in relation to the first boom section without the first section needing to be fixed or held fast. Only if the free extremity of the service boom is so displaced in such a way that the first section needs to take up another position will this section rotate. When the service boom is released and no external force is being applied to it, then if the dimensions of the washers and the bushes have been correctly computed in relation to the weight of the boom, the whole boom will remain in the position in which it was last put.

In a preferred design of the device in accordance with the invention, near the extremities of the vertical tubular portion the internal diameter is increased relative to the internal diameter of the central part of the tubular portion over a length smaller than the length of the bushes, and the external diameter of the bushes over their whole length or almost their whole length is the same as this increased diameter.

Using the device with such features the bushes can be fitted firmly into the extremities of the tubular element so as to project outwards, so that the bushes serve as a bearing surface for the whole arm. The washers and bushes should preferably be made of a synthetic material such as self-lubricating nylon.

Advantageously, the hinge between the two sections of the boom includes an intermediate link having two pairs of oppositely extending arms, each arm of each pair being formed with a transverse bore adjacent its free end and the bores in the arms of each pair being coaxial, and wherein the second end of each boom section is formed with a projection dimensioned so as to be receivable between the arms of one of the arm pairs of the intermediate link and formed with a bore alignable with the bores of the arms so as to receive a pivot pin.

The second section of the boom can be placed alongside the first, and the cables and leads running along or through the arm will not be subjected to excessively sharp bending, preventing the occurrence of breaks in the lines. The distance between the two axes of the hinge must be somewhat greater than half the sum of the widths of the two sections of the arm.

In order to be able to support its own weight easily without sagging, and in order to ensure that the torsion forces have little effect on the boom, each section of the boom should preferably consist of two tubes places one above the other and connected near their extremities. The result of this arrangement is that if the two sections lie in line and vertical downward loading is applied to the arm, very little deflection of the boom end will be seen. To this end diagonal stays can also be fitted between the tubes of each section to provide still better stiffness.

Feed and discharge lines will preferably run through the upper tube of both the first and second boom sections and at the point where the two sections hinge with respect to each other the ends of the respective tubes will be connected by a flexible pipe or by bellows. The lower tubes of both boom sections are also connected by a flexible pipe or by bellows at the hinge, the lower tube serving, for example, to carry away gases such as motor car exhaust gases. These flexible pipes should preferably be made of plastics material, rubber or metal and should be of concertina or folding bellows design.

A wall plate bolted to a wall and to which is fastened a vertical spindle, may be used to mount the boom to a wall. It is also possible to use a spindle that is vertically fastened to extend downwardly from a ceiling, a retaining plate or disc being provided at the lower end of the spindle to support the boom.

An embodiment of the invention will now be described in detail with reference to the accompanying drawings, in which:

Figure 1 is a side view showing a boom having two sections in its extended position;

Figure 2 is an enlarged sectional view of the hinged point between the two sections of the boom of Figure 1;

Figure 3 is a side view of the second end of the second boom section; and

Figure 4 is an enlarged sectional view showing a wall plate in section with the vertical spindle and a part of the first boom section.

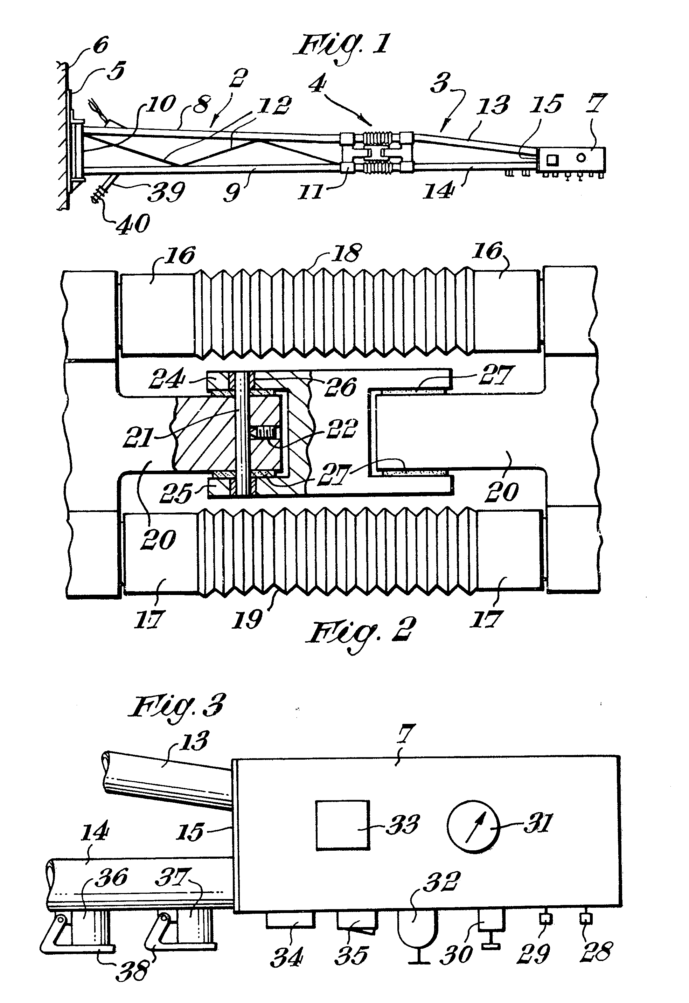

Referring now to the drawings, Figure 1 shows a device in accordance with the invention, consisting of a boom made up of first and second sections 2, 3, which are connected by means of a hinged joint 4. A first end of the first section 2 of the boom is fastened to a wall 6 by means of a wall plate 5. At the other or free end of the boom 1 there is a box or housing 7 in and to which a number of appliances are fitted. The first section 2 of the boom 1 consists of two vertically spaced tubes 8, 9, the upper tube 8 being slightly downwardly inclined from the wall, and the lower tube 9 being substantially horizontal. The ends of the two tubes 8, 9, adjacent the wall 6 are connected by a vertical tubular portion 10, to which the tubes 8, 9 are welded. The two other ends of the tubes 8, 9 are also connected together, by means of an M-shaped element 11. In order to reinforce the first boom section 2, a number of inclined reinforcing ties 12 are welded between the tubes 8 and 9. The second boom section also consists of two vertically spaced tubes 13, 14 lying one above the other, the lower tube being substantially horizontal and the upper tube 13 being inclined downwardly. The tubes are connected at one end by a second M-shaped element 11 and the two other ends of the tubes 13 and 14 are connected by means of a plate 15, which also forms one of the walls of the housing 7. The ends of the tubes 13 and 14 are preferably welded to the plate 15 and to the M-shaped element 11.

Figure 2 shows the hinged joint 4 in more detail partially in cross-section. The two M-shaped elements 11 forming the adjacent second ends of the two boom sections 2, 3 are each designed as a single casting, the two outer legs 16, 17 being hollow to serve as extensions of tubes 8, 9 and 13, 14 respectively. A folding bellows 18 is positioned between the two upper legs 16, and a similar bellows 19 joins the two lower legs 17. The centre part of each M-shaped element forms a projection 20, in which a spindle 21 is vertically located in a bore, the spindle being secured in the bore by a small grub screw 22. Between the two projections 20 there is an intermediate link or casting 23 resembling an H or two U-shaped elements back-to-back, aligned holes having been drilled in the two arms 24, 25 of the two U-shaped parts of the intermediate link 23 and a bronze bush 26 being fixed tightly in each hole. The two ends of the spindle 21 are pushed into respective ones of the bronze bushes 26. Between the leg 24 and the projection 20 and the leg 25 and the projection 20 there are two circular washers 27, preferably made of self-lubricating nylon.

Figure 3 shows the free end of the arm 1 in one possible configuration of the device. The tubes 13, 14 are welded to a plate 15. A housing 7 is attached to the plate 15. Feed lines and cables bringing for example electrical power and compressed air to the housing 7 run through the tube 13, the bellows 18, the tube 8 and thence to the supply. Underneath the housing 7 there are seen a valve 28 and a reducing valve 9, the reducing valve being adjustable by means of a valve cock, connected to the compressed air supply. The pressure at which the air from the reducing valve is to flow can be read off from the gauge 31, which may be one of a pair fitted to each side of the box 7. An oil and water separator 32 for the compressed air supply is also mounted visibly underneath the housing 7. Sockets 33 are also fitted to each side of the housing and underneath the housing 7 there is another socket 34 for the electrical power supply. The drawing also shows a switch 35, which can, for example, be used for remote operation of the compressed air. Clearly, other arrangements of service outlets may be provided, according to the user's requirements.

In this embodiment of the boom the function of the lower tubes 9, 14 of the arm sections 2, 3 is to enable motor car exhaust gases to be carried away. For this purpose two intake spigots 36, 37 are fitted to the tube 14 adjacent the housing 7, and these spigots can be closed by means of hinged covers 38. A discharge aperture 39 is fitted to the lower tube 9 near the pivot pin of the boom (see Figure 1) and a flexible hose 40 may be attached thereto, the flexible hose being connected to an extractor system. In use, further flexible hoses are used to connect vehicle exhaust pipes to the spigots 36, 37 so that the work area does not become contaminated.

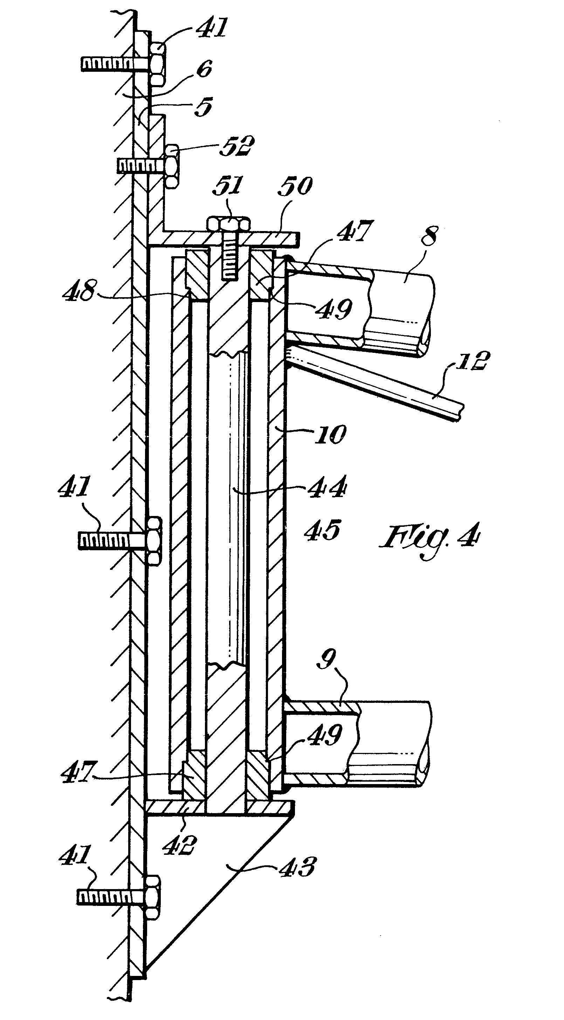

Figure 4 shows in cross-section the wall plate 5, which can be bolted to the wall 6 by a number of bolts 41. A horizontal plate 42 and a triangular gusset 43 are welded to the wall plate 5, and to the horizontal plate 42 there is fixed a vertical shaft 44 about which the boom can turn in a horizontal plane. For this purpose the vertical tubular portion 10 is provided with a central bore 45. For a short distance near the two ends of the vertical tubular portion 10 the diameter of the central bore 45 is slightly enlarged, to provide shoulders 49. At both ends of the tubular portion 10, where the diameter is slightly larger, there are stepped cylindrical bushes 47, the external diameter of which corresponds to the internal diameter of the ends of the vertical tubular portion 10 and whose lengths are such that they project outwards for a short distance. The bushes 47 are provided with a central hole, to receive the shaft 44, and locate it concentrically in the tubular portion 10. The step in the outer surface of each bush engages a shoulder 49 in the tube 10. The upper end of the shaft 44 is attached to the wall plate 5 by means of an L-shaped piece 50 and two bolts 51, 52, so that the shaft 44 and the tubular portion 10 are securely held at both ends.

In the embodiment shown, the length of the second boom section 3 is shorter than the length of the first boom section 2, reducing the stresses on the hinge between the two sections.

The washers 27 and the bushes 47 determine the amount of friction at the swivel pin and the hinge pins of the arm. Making the circular plates 27 and the bushes 47 of self-lubricating nylon means that the coefficient of friction is the same in both cases and only the friction surface is decisive for the degree of friction. Selecting a surface for the plates that ensures that the second section 3 of the arm 1 will not easily twist under its own weight in relation to the first section 2 of the arm 1 makes it easily possible to determine the dimensions the bushes 47 need to have. The factor determining the amount of friction near the swivel pin 44 is the contact surface of the bushes 47 and the swivel pin 44 and this is equal to the circumference of pin 44 times the length of the bush 47. In an effective embodiment of the arm in accordance with the invention the friction near the swivel pin of the arm is approximately ten times greater than at one of the hinge pins between the two sections of the arm.

## Claims

1. A service boom comprising first and second elongate boom sections a first end of the first boom section being adapted to be mounted to a wall for pivotal movement about a vertical axis, a first end of the second boom section carrying attachment points for services, and the second ends of the first and second boom sections being joined together by a hinged joint for relative rotation about a vertical axis.

2. A service boom according to Claim 1, wherein the hinged joint includes a first pivot pin whose central portion is received in a bore in a projection mounted on one boom section, and whose ends are received in aligned bores formed in a pair of arms mounted on the other boom section.

3. A service boom according to Claim 1 or Claim 2, wherein the hinged joint includes an intermediate link to which the second ends of both boom sections are respectively connected for pivotal motion about spaced parallel axes.

4. A service boom according to Claim 3, wherein the intermediate link has two pairs of parallel arms extending in opposite directions, each arm of each pair being formed with a transverse bore adjacent its free end and the bores in the arms of each pair being coaxial, and wherein the second end of each boom section is formed with a projection dimensioned so as to be receivable between the arms of one of the arm pairs of the intermediate link and formed with a bore alignable with the bores of the arms so as to receive a pivot pin.

5. A service boom according to Claim 3, wherein each boom section has a pair of arms extending from its second end and the intermediate link has a pair of oppositely extending projections, respective ones of the projections being receivable between respective pairs of arms, and alignable bores being formed in the arms and their associated projections to receive respective pivot pins.

6. A service boom according to Claim 4 or Claim 5, wherein one or more friction-reducing elements are interposed between the projections and the arms.

7. A service boom according to Claim 6, wherein the friction-reducing elements are formed of synthetic plastics material.

8. A service boom according to Claim 1, wherein the first end of the first boom section includes a vertical tubular portion at whose ends are disposed bushes of friction-reducing material, the bushes being rotatably mounted on a vertical shaft passing through the tubular portion and adapted for attachment to a wall.

9. A service boom according to Claim 8, wherein the tubular portion has an internal annular axially outwardly facing step adjacent each of its ends, and the bushes each extend from an end of the tubular portion to beyond the adjacent step.

10. A service boom according to Claim 8, wherein the axial lengths of the bushes are arranged so that the frictional resistance to pivoting of the first boom section about the vertical shaft is greater than the resistance to pivoting of the hinged joint between the boom sections.

11. A service boom according to Claim 8, wherein the bushes are formed of synthetic plastics material.

12. A service boom according to any preceding Claim, wherein the boom sections each comprise two spaced elongate co-extensive tubular elements fixed together at or adjacent their ends.

13. A service boom according to Claim 12, wherein flexible tubular connecting elements are provided at the hinged joint to connect the elongate tubular elements of the first boom section to those of the second boom section to form two continuous and separate passageways extending from the first end of the first boom section to the first end of the second boom section.

14. A service boom according to Claim 13, wherein a housing is provided at the first end of the second boom section, at least one of the passageways communicating with the interior of the housing.

15. A service boom according to Claim 14, wherein electrical supply cables and/or a compressed air supply line passes along said one passageway and are connected to appropriate control and outlet means mounted on the housing.

16. A service boom according to Claim 13, wherein one of said passageways is closed at its ends, and is provided adjacent the respective first ends of the first and second boom sections with spigots allowing hoses to be connected in communication with the passageway.

17. A service boom according to Claim 16, wherein two spigots are provided adjacent the first end of the second boom section and a third spigot is provided adjacent the first end of the first boom section.

18. A service boom according to Claim 17, wherein the two spigots are provided with closure means which closes the spigot when no hose is attached thereto.

0238292

Fig. 1

Fig. 2

Fig. 3

Fig. 4

0238292

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 392 780  (PLYMOTHPP)<br>* Pages 1,2; page 3, lines 1-20 * | 1 | B 25 H    1/00<br>B 23 Q    1/16<br>B 60 S    5/00<br>B 66 C   23/20<br>F 16 C   33/20<br>F 16 C   11/04 |
| A |  | 8 |  |
| X | FR-A-2 516 428  (GIROS)<br>* Whole document * | 1 |  |
| A |  | 8,9 |  |
| A | US-A-3 193 335  (WING)<br>*  Column  2, lines 54-72; column 3, lines 1-20 * | 11 |  |
| A | DE-B-1 202 449  (DEMAG-ZUG) |  |  |
| A | DE-C-  800 032  (MOHN) |  | TECHNICAL FIELDS SEARCHED (Int. Cl.4)<br><br>B 66 C<br>B 23 Q<br>B 60 S<br>B 25 H<br>F 16 C |
| A | GB-A-  381 860  (RIDLEY) |  |  |
| A | DE-A-2 747 291  (VETTER) |  |  |
| A | FR-A-1 365 378  (THIBAULT) |  |  |

-/-

The present search report has been drawn up for all claims

| Place of search | Date of completion of the search | Examiner |
|---|---|---|
| THE HAGUE | 29-05-1987 | VAN DEN BERGHE E.J.J |

| | DOCUMENTS CONSIDERED TO BE RELEVANT | | Page 2 |
|---|---|---|---|

| Category | Citation of document with indication. where appropriate, of relevant passages | Relevant to claim | CLASSIFICATION OF THE APPLICATION (Int. Cl.4) |
|---|---|---|---|
| A | US-A-3 917 200 (JOHNSON) | | |
| | --- | | |
| A | US-A-4 002 243 (KRAMER) | | |
| | --- | | |
| A | US-A-1 949 777 (BRISTOL) | | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 29-05-1987 | VAN DEN BERGHE E.J.J |